# EUROPÄISCHE PATENTSCHRIFT

(11) **EP 3 493 935 B1**
(45) Veröffentlichungstag und Bekanntmachung des Hinweises auf die Patenterteilung: **18.12.2024**
(21) Anmeldenummer: 17745334.7
(22) Anmeldetag: 28.07.2017
(51) Int. Cl.: B23C 3/06, B23C 5/26

(54) **INNENFRÄS-MASCHINE**
INTERNAL MILLING MACHINE
MACHINE À FRAISAGE INTERNE

(30) Priorität: 02.08.2016 DE 102016114252
(43) Veröffentlichungstag der Anmeldung: 12.06.2019
(73) Patentinhaber: MAG IAS GmbH, 73054 Eislingen (DE)
(72) Erfinder: POMPE, Walter, 73333 Gingen (DE); SCHWEIZER, Andreas, 73342 Bad Ditzenbach Gosbach (DE); PUSCHINA, Günther, 73087 Bad Boll (DE); FLEISCHER, Achim, 73116 Wäschenbeuren (DE); ANDERS, Helmut, 73108 Gammelshausen (DE); RUMMEL, Ralf, 73033 Göppingen (DE); FRINKE, Manuel, 89073 Ulm (DE); OST, Daniel, 73095 Albershausen (DE)
(74) Vertreter: Weickmann & Weickmann PartmbB
(86) Internationale Anmeldenummer: PCT/EP2017/069143
(87) Internationale Veröffentlichungsnummer: WO 2018/024627

(56) Entgegenhaltungen:
- EP-A1- 0 417 446
- DE-A1- 102007 038 147
- DE-A1- 2 239 380
- DE-A1- 2 923 809
- US-A- 4 157 055
- US-A- 4 180 359
- US-A- 4 525 112
- US-A1- 2012 148 351
- US-B2- 7 179 029

## Beschreibung

### I. Anwendungsgebiet

Die Erfindung betrifft eine Drehfräs-Maschine zum Bearbeiten von Wellen, insbesondere Kurbelwellen, mittels eines ringförmigen, innenverzahnten sogenannten Innenfräsers.

### II. Technischer Hintergrund

Während bei einer Kurbelwelle die zentrisch liegenden Hauptlager relativ einfach auch mit anderen spanenden Verfahren wie etwa Drehen bearbeitet werden können, ist dies für die exzentrisch liegenden Hublager schwieriger.

Hier wird generell das Fräsen bevorzugt, wahlweise das Fräsen mittels eines außenverzahnten Scheibenfräsers oder eines stirnseitig mit wenigstens einer Schneide bestückten Fingerfräsers oder mittels des hier im Fokus stehenden Innenfräsers, also eines ringförmigen, am Innen-Umfang verzahnten, Fräsers.

Beim Drehfräsen ist zusätzlich zur Rotation des Fräsers um die Fräserachse - wie der Begriff bereits aussagt - einerseits eine Drehung des Werkstückes um die Dreh-Achse, die Z-Richtung, notwendig, wodurch ein Umlauf des Fräsers um die zu bearbeitende Umfangsfläche, bei einer rotationssymmetrischen Umfangsflächen wie einer Lagerstelle um die Umfangsfläche dieser Lagerstelle, erreicht wird.

Dabei sind als Fräser auch sogenannte Innen-Fräser bekannt, also ringförmige Fräser mit Schneiden an ihrem Innen-Umfang, durch den sich die zu bearbeitende Außen-Umfangsfläche des Werkstückes hindurch erstreckt.

Dabei sind zwei grundsätzliche Bauformen von Innen-Fräsmaschinen zu unterscheiden:
**1.** Wirbel-Maschinen:
   Bei den bereits in den achtziger Jahren verwendeten sogenannten Wirbel-Maschinen steht das zu bearbeitende Werkstück, zum Beispiel die Kurbelwelle, während der Fräsbearbeitung still und der Mittelpunkt des ringförmigen Innenfräsers vollzieht einen Umlauf um die stillstehende, zu bearbeitende Lagerstelle.
**2.** Innen-Fräsmaschine mit drehendem Werkstück:
   Das Werkstück, insbesondere die Kurbelwelle, dreht sich während der Fräsbearbeitung, sodass es ausreicht, dass sich der rotierende Innenfräser lediglich in einer Querrichtung X zur Längsrichtung Z, der Rotations-Achse der Kurbelwelle - die bei allen Drehmaschinen als Z-Richtung definiert ist - bewegen lässt. Die Querbewegung des Innenfräsers muss natürlich gesteuert verfahrbar sein in Abstimmung mit der ebenfalls gesteuerten Drehbewegung (C-Achse) des Werkstückes.

Im Folgenden ist immer von Kurbelwellen die Rede, ohne die Erfindung auf die Anwendung ausschließlich bei Kurbelwellen zu beschränken. Vielmehr können auch alle anderen Wellen und dort vorhandenen Umfangsflächen, insbesondere im Querschnitt kreiszylindrische Umfangsflächen, mit der erfindungsgemäßen Maschine bearbeitet werden.

Für die hier im Fokus stehende zweite Bauform besitzt die Maschine den Grundaufbau einer Drehmaschine, also mit einem oder vorzugsweise zwei gegeneinander gerichteten Spindelstöcken, von denen jeder eine Werkzeugspindel mit einem darauf stirnseitig sitzenden Spannfutter besitzt, in welchem eines der beiden Enden der Kurbelwelle eingespannt und gesteuert um die Drehachse, die in Z-Richtung verläuft, gedreht werden kann in Abstimmung mit der Querbewegung des Innenfräsers.

Der Vorteil des Innen-Fräsers gegenüber einem Außenfräser sind die in Z-Richtung betrachtet geringeren Quer-Abmessungen der Maschine und vor allem die geringeren Herstellungskosten der zu bearbeitenden Oberflächen, was mit der geringeren Anzahl von Schneiden an einem Innenfräser gegenüber einem Außenfräser, der die gleiche Lagerstelle bearbeiten kann, zusammenhängt.

Bei vielen Innenfräsmaschinen, z.B. US 7 179 029 B2, ist der Support für die Fräseinheit seitlich versetzt parallel zu dem wenigstens einen Spindelstock angeordnet ist und auf dortigen Z-Führungen verfahrbar ist, die meist parallel und ebenfalls seitlich versetzt zu den Z-Führungen des Spindelstockes verlaufen, was aber eine nicht optimale Stabilität der Maschine ergibt.

Es ist ferner z. B. bei der US 7 179 029 B2, sowohl bei Fräsmaschinen als auch bei Drehmaschinen bekannt, das Maschinen-Bett als Schrägbett auszuführen, also mit einer schräg von hinten nach vorne abfallenden Montagefläche, auf der die übrigen Komponenten der Maschine befestigt sind wie etwa der wenigstens eine Spindelstock, gegebenenfalls ein Reitstock, eine Zusatz-Spannvorrichtung und der wenigstens eine Werkzeug-Support.

Dies ermöglicht eine gute Zugänglichkeit für den Bediener zu den einzelnen Komponenten, vor allem bei Wartungsarbeiten oder für das Wechseln der Werkzeuge, und dies bewirkt auch, dass auf diese Montagefläche herabfallende Späne schnell vom Bett herabrutschen in einen separaten, etwa vor der Vorderkante des Bettes verlaufenden, Späneförderer, sodass die Zeit, in der die gerade beim Fräsen sehr heißen Späne Wärme an das Bett abgeben können, sehr kurz ist und damit die Aufheizung des Bettes gering bleibt.

Ferner ist es aus der US 4525112 für eine Innenfräs-Maschine bekannt, deren Z-Schlitten mit der Werkzeugeinheit soweit quer zur Längsrichtung der Maschine und des Werkstückes verfahren werden kann, dass es sich in dieser Richtung weitestgehend außerhalb des Bereiches des Spindelstockes befindet, um einen Werkzeugwechsel zu erleichtern.

Ferner ist aus der US 4180359, auf der der Oberbegriff von Anspruch 1 beruht, sowie der zugrundeliegenden DE 2658970 A1 eine Innenfräs-Maschine bekannt, bei der sich die Führungen für den Z-Schlitten nicht beabstandet zur Lotrechten der Mitte des Spindelfutters auf das Schrägbett befinden, sondern genau darunter.

Der Durchlass im Z-Schlitten ist allseitig umschlossen und nicht nach unten offen. Der Werkstück-Spindelstock als auch der Werkstück-Gegenspindelstock sind in Z-Richtung feststehend ausgebildet.

Weiterhin zeigt die US 2012/0148351 A1 ein spezifisch für das Innenfräsen ausgebildetes Fräswerkzeug.

### III. Darstellung der Erfindung

### a) Technische Aufgabe

Es ist daher die Aufgabe gemäß der Erfindung, eine für das vorgenannte Drehfräsen einer Kurbelwelle mit einem Innenfräser geeignete Maschine zur Verfügung zu stellen, die trotz einfachem Aufbau und geringer Bauhöhe eine hohe Stabilität und damit Fertigungsgenauigkeit bei guter Bedienbarkeit und Zugänglichkeit aller Komponenten der Maschine bietet.

### b) Lösung der Aufgabe

Diese Aufgabe wird durch die Merkmale des Anspruchs **1** gelöst. Vorteilhafte Ausführungsformen ergeben sich aus den Unteransprüchen.

Für die Zwecke der vorliegenden Anmeldung werden die Richtungen und Ebenen wie folgt definiert:

### Z-Richtung:

Richtung der Drehachse, um welche die in die Futter der Werkstück-Spindel des wenigstens einen Spindelstockes eingespannte Kurbelwelle während der Fräs-Bearbeitung gedreht wird.

### Querebene:

Die lotrecht zur Z-Richtung verlaufende Ebene.

### Montagefläche:

Diejenige Fläche des Bettes, auf welcher der Fräser-Support befestigt ist.

### Stützfläche:

Die Aufstands-Fläche des Bettes auf dem Untergrund. Da in aller Regel das Bett nicht mit seiner Unterseite direkt auf dem Untergrund aufliegt, sondern an der Unterseite des Bettes Stellfüße angebracht sind, ist die Stützfläche diejenige Fläche, in der die unteren Auflageflächen aller Stellfüße liegen.

### X-Richtung:

Diejenige lotrecht zur Z-Richtung in der Querebene verlaufende Querrichtung, die zusammen mit der Z-Richtung die Montagefläche des Bettes aufspannt, auf welcher der Fräser-Support befestigt ist. Die Montagefläche des Bettes muss keineswegs eben gestaltet sein, sondern kann Absätze aufweisen, jedoch ist die X-Richtung die nach der Erstreckung in Z-Richtung größte Erstreckungsrichtung der Montagefläche, falls diese dreidimensional gestaltet ist.

### X'-Richtung:

Verfahrrichtung des Innenfräsers in der Querebene maximal um einen Zusatz-Winkel von **45°** gegenüber der X-Richtung geneigt.

### Y-Richtung:

Die sowohl auf der Z-Richtung als auch der X-Richtung lotrecht stehende dritte Raumrichtung.

Die angegebene Aufgabe wird bei einer gattungsgemäßen Maschine - die in der Regel zwei Spindelstöcke mit gegeneinander gerichteten Spannfuttern aufweist - dadurch gelöst, dass bei dem wenigstens einen Fräser-Support, der Z-Schlitten als brückenförmiger, also portalförmiger, Portalschlitten ausgebildet ist mit einer in Z-Richtung betrachtet umgekehrten U-Form, und die beiden freien unteren Enden der beiden frei endenden Schenkel der U-Form dieses Portalschlittens auf jeweils einer ersten Z-Führung, die in Z-Richtung entlang des Bettes verläuft, verfahrbar ist.

Der Zwischenraum zwischen den Schenkeln des Portalschlittens ist groß genug zum Hindurchführen des Werkstückes bzw. des Futters bzw. des Spindelstockes, je nach momentaner Z-Position des Z-Schlittens.

Ferner ist an diesem Portalschlitten ein Querschlitten, der sogenannte X-Schlitten, in X'-Richtung verfahrbar entlang von zueinander beabstandeten Quer-Führungen, die auf einander gegenüberliegenden Seiten bezüglich der Drehachse der Maschine angeordnet sind.

Da in dem Querschlitten -zwischen den beiden Quer-Führungen - der Innen-fräser drehbar gelagert ist, ergibt sich durch diesen Aufbau eine aufgrund der geringen Hebellängen zwischen Führungen und dem Innenfräser sehr stabile und damit präzise Lagerung und Führung des Innenfräsers, was essentiell für eine hohe Bearbeitungsgenauigkeit des Werkstückes ist.

Insbesondere wird eine solche Anordnung bevorzugt, dass - betrachtet in Z-Richtung - bei einem von der Fräser-Mitte auf die X-Richtung gefällten Lot der Fußpunkt dieses Lotes, zumindest während der Bearbeitung, vorzugsweise in überhaupt keinem regulären Funktions-Zustand der Fräsmaschine, außerhalb des Zwischenraumes zwischen den Z-Führungen für den Werkzeug-Support liegt.

Da die X'-Richtung, in der der Querschlitten verfahrbar ist, gegenüber der X-Richtung, in der sich die Montagefläche des Bettes erstreckt, nur um einen Zusatz-Winkel von höchstens **45°** flacher oder steiler geneigt sein darf, ergibt dies eine günstige Schwerpunkt-Lage des Fräser-Supportes über dem Maschinen-Bett und die Bauhöhe der Maschine kann geringer gehalten werden als bei einer Verfahrbarkeit des Querschlittens beispielsweise lotrecht zur Montagefläche.

Da es sich zusätzlich bei dem Maschinen-Bett um ein Schrägbett handelt, also die Montagefläche von hinten nach vorne, zu die Bedienerseite hin abfallend geneigt ist, ergeben sich hieraus weitere Vorteile:
Bei ausreichender Neigung der Montagefläche rutschen die darauf fallenden Späne selbsttätig schwerkraftbedingt nach unten ab mit nur einer geringen Verweilzeit auf der Montagefläche bzw. darüber angeordneten Abdeckung der Montagefläche. Dies vermindert die Aufheizung des Maschinenbettes.

Wenn zusätzlich die Vorderkante der Montagefläche beabstandet zur Unterseite des Bettes, insbesondere dessen Stützfläche gegenüber dem Untergrund, angeordnet ist, kann in Längsrichtung des Bettes, insbesondere in Z-Richtung, verlaufend unmittelbar vor und unter dieser Vorderkante ein Späneförderer verlaufen, in den die Späne hineinrutschen, und der ein vom Bett getrenntes, separates Bauteil ist.

Dadurch sind Vertiefungen im Untergrund, wie sie bei einem Späneförderer unter einem Bett mit horizontaler Montagefläche oft notwendig sind, vermeidbar. Auch die Zugänglichkeit zum Späneförderer ist wesentlich besser.

In der Regel verläuft dabei in Z-Richtung ein Späne-Längsförderer, in den die Späne hineinfallen, und der am einen Ende die Späne in einen Späne-Querförderer übergibt, der meist im rechten Winkel zur Verlaufsrichtung des Späne-Längsförderers in der Horizontalen meist entlang der einen Stirnseite des Bettes nach hinten verläuft und die Späne zum Beispiel zu einem Sammelbehälter transportiert.

Die Neigung der Montagefläche des Bettes von hinten nach vorne, also die X-Richtung, hat sich als optimal erwiesen, wenn dieser Bettwinkel zwischen der Montagefläche und der Stützfläche des Bettes zwischen **40°** und **60°** beträgt, insbesondere zwischen **45°** und **55°,** insbesondere zwischen **48°** und **52°.** Dadurch ist einerseits ein schwerkraftbedingtes Abrutschen der Späne noch möglich, und andererseits wird die Bauhöhe der Maschine nicht zu groß und der Schwerpunkt des darauf geführten Fräser-Supportes liegt nicht allzu weit vorne und ergibt somit keine kopflastige Maschine.

Die Verfahrrichtung X' des X-Schlittens sollte gegenüber dieser X-Richtung zusätzlich besser höchstens um maximal **45°,** besser zusätzlich um maximal **30°,** besser zusätzlich maximal um **15°,** besser zusätzlich maximal um **5°** geneigt sein zur X-Richtung, um die Bauhöhe der Maschine zu minimieren.

Der freie innere Durchlass des Innenfräsers ist größer als der in Z Richtung betrachtete Querschnitt der zu bearbeitenden Umfangs-Fläche und insbesondere der Gesamt-Querschnitt der zu bearbeitenden Kurbelwelle, so dass der Portalschlitten mit dem entsprechend in Querrichtung eingestellten Innenfräser in Z-Richtung über die gesamte Erstreckung entlang der hindurchverlaufenden Kurbelwelle verfahren werden kann.

Der freie innere Durchlass des Innenfräsers ist ferner insbesondere auch größer als der Außenumfang des benachbarten Futters der Werkstück-Spindel, so dass der Innenfräser in Z-Richtung in den Bereich des Futters und dieses umgreifend verfahren werden kann.

Er ist ferner insbesondere auch größer als der Außenumfang der Werkstück-Spindel, so dass der Innenfräser in Z-Richtung in den Bereich der Werkstückspindel, und diese umgreifend verfahren werden kann.

Damit ist der gesamte Bereich zwischen den Futtern und einschließlich des Längenbereiches der Futter frei zugänglich für das Einspannen einer neuen Kurbelwelle in die Maschine.

Gleichzeitig sollte der Querschlitten mit dem Innenfräser soweit entlang seiner Querführungen nach vorne unten verfahrbar sein, dass für Montagearbeiten und vor allem das Wechseln des Innenfräsers sich der Innenfräser auf Arbeitshöhe eines vor der Maschine stehenden Bedieners befindet, also unterhalb der Kopfhöhe des Bedieners. Vorzugsweise verläuft in dieser Wechselstellung die Drehachse der Maschine nicht mehr durch den freien Innenraum, den Flugkreis, des Innenfräsers hindurch.

Aus dem gleichen Grund ist der den Fräser antreibende Fräsmotor, der am Querschlitten befestigt ist, bezüglich der Fräserachse auf der Vorderseite, vorzugsweise oberhalb der Fräserachse, am Querschlitten befestigt, wobei darauf geachtet werden muss, dass der Schwerpunkt der Gesamtmaschine, also einschließlich des Bettes, sich dennoch in der Aufsicht betrachtet innerhalb der Grundfläche des Bettes befindet.

Der Fräsmotor für den Antrieb des Fräsers ragt dabei vorzugsweise von dem X-Schlitten aus in Z-Richtung von dessen Rückseite ab und erstreckt sich an dem den X-Schlitten tragenden Portalschlitten vorbei. Dies ergibt eine besonders platzsparende Anordnung.

Aus dem gleichen Grund ist auch der X-Motor, der den X-Schlitten relativ zum Z-Portal verfährt, ebenfalls vor der Fräserachse und vorzugsweise oberhalb der Fräserachse angeordnet.

Die Übertragung der Antriebskraft vom Fräsmotor auf den Innenfräser erfolgt über ein Fräsgetriebe, welches in einem Getriebefortsatz angeordnet ist, welches vom Rest des X-Schlittens in der Querebene abragt und in Z-Richtung betrachtet vorzugsweise keine größere Breite besitzt als der Rest des X-Schlittens.

In der Regel ist der Innenfräser nicht direkt in dem X-Schlitten gelagert, sondern drehfest in einer somit mit dem Innenfräser mitdrehenden Rotationseinheit in Form einer ringförmigen, sogenannten Speichenplatte befestigt, die sich primär in der Querebene erstreckt und einen Durchlass zur Aufnahme und drehfesten Befestigung des Innenfräsers darin aufweist. Diese Speichenplatte weist über den Umfang verteilt in Z-Richtung abstrebende, nämlich nach hinten in Richtung des X-Schlittens abstrebende, speichenförmige Abstandshalter auf, die mit ihren freien Enden an einem in Umfangsrichtung durchgehenden Rotationsring ebenfalls drehfest befestigt sind. Erst dieser Rotationsring ist mittels eines Fräserlagers drehbar im X-Schlitten gelagert.

Als Fräserlager wird dabei vorzugsweise ein sogenanntes YRT-Lager verwendet, wie es ansonsten für die Lagerung von horizontal liegenden Drehtischen in Werkzeugmaschinen verwendet wird, und welches tonnenförmige oder zylinderförmige Wälzrollen aufweist.

Der Vorteil der Speichenplatte und vor allem der in Umfangsrichtung verteilt angeordneten und beabstandeten Abstandshalter besteht darin, dass die Späne, die beidseits der Querebene des Innenfräsers herabfallen, beim Herabfallen in Richtung X-Schlitten zwischen den Abstandshaltern nach unten fallen können auf die Montagefläche des Bettes, und - wegen der während des Fräsens ja mit dem Innenfräser mitdrehenden Abstandshalter der Speichenplatte - von diesen auch sehr schnell herabgeworfen werden. Dadurch wird eine Aufheizung der Speichenplatte und mithin der Lagerung im X-Schlitten weitgehend vermieden, was der Bearbeitungsgenauigkeit der gesamten Maschine zugutekommt.

Ferner verfügt die Maschine vorzugsweise über eine Zusatz-Spannvorrichtung, um die Kurbelwelle zwischen den Spannfuttern möglichst nahe an der Bearbeitungsstelle oder überhaupt im Bereich zwischen den beiden Spannfuttern abstützen zu können. Die Zusatz-Spannvorrichtung umfasst in diesem Fall gegeneinander verfahrbare, vorzugsweise zwei, Spann-teile, vorzugsweise Spannplatten, die beidseits an einem der Lager der Kurbelwelle radial angepresst werden können, und deshalb auf der dem Werkstück zugewandte Seite vorzugsweise jeweils eine prismenförmige Aufnahme aufweisen, deren zum Lager hin gerichtete Kontaktflächen mit einer Gleit-Beschichtung ausgestattet ist, vorzugsweise mit polykristallinen Diamant-Platten (PKD-Pads).

Hierzu ist auf einem Spann-Z-Schlitten, der entlang von Z-Führungen in Z-Richtung auf der Montagefläche geführt ist, ein Spann-X-Schlitten in X'-Richtung oder in X-Richtung gesteuert verfahrbar geführt.

Die Spannplatten erstrecken sich in der Querebene, und ragen von dem Spann-X-Schlitten in Richtung Fräserachse und über diese hinaus.

Die beiden Spannplatten sind gegenüber dem Spann-X-Schlitten in einer Querrichtung, vorzugsweise in X'-Richtung oder in X-Richtung, gesteuert verfahrbar, um die Spannbewegung durchzuführen.

Der Spann-Z-Schlitten läuft auf Z-Führungen, die sich vorzugsweise - natürlich in Querrichtung, vorzugsweise der X-Richtung, beabstandet - zwischen den Z-Führungen für den einen oder die beiden Z-Schlitten der Werkzeug-Supporte befinden.

In der Regel besitzt eine solche Maschine auch, wie oben dargelegt, einen Gegen-Spindelstock, der dann in Z-Richtung ebenfalls verfahrbar sein muss, um Kurbelwellen verschiedener Längen spannen zu können.

Der Gegen-Spindelstock, der dann vorzugsweise ebenfalls entlang derselben Längsführungen, auf denen der Spann-Z-Schlitten läuft, verfahren, jedenfalls auf Längsführungen, die sich zwischen den Längsführungen für den einen oder die beiden Fräser-Supporte befinden.

Die Maschine umfasst auch eine Einhausung, die den Arbeitsraum begrenzt, gegen unbefugtes Hineingreifen sichert und abdichtet.

Dabei sind die in Z-Richtung betrachteten beiden Seiten der Einhausung aus in der Frontansicht streifenförmigen, im geschlossenen Zustand in Z-Richtung dicht aneinander anschließenden, Segmenten aufgebaut, die sich einzeln verfahren lassen und aufgrund unterschiedlicher, ineinander passender Abmessungen - betrachtet in Z-Richtung - auch ineinander, also in den gleichen Z-Bereich, vorzugsweise den Z-Bereich einer der Werkstück-Spindeln, verfahren lassen, sodass dann der gesamte Arbeitsbereich zwischen den Spannfuttern einschließlich der Spannfutter offen und zugänglich liegt.

Zusätzlich kann in der Oberseite der Einhausung eine Einlegeöffnung vorhanden und mit einer Einlegeklappe oder Einlegetür verschließbar sein, so dass ohne das Verfahren der Segmente der Einhausung in Z-Richtung in der Oberseite der Einhausung eine Einlegeöffnung zum Wechseln des Werkstückes geöffnet werden kann.

### c) Ausführungsbeispiele

Eine Ausführungsform gemäß der Erfindung ist im Folgenden beispielhaft näher beschrieben. Es zeigen:

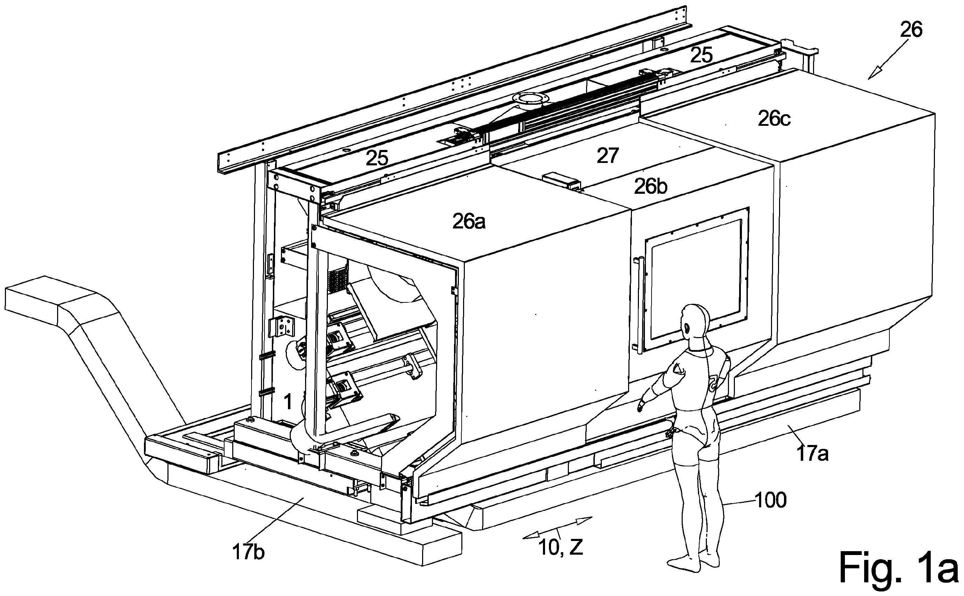

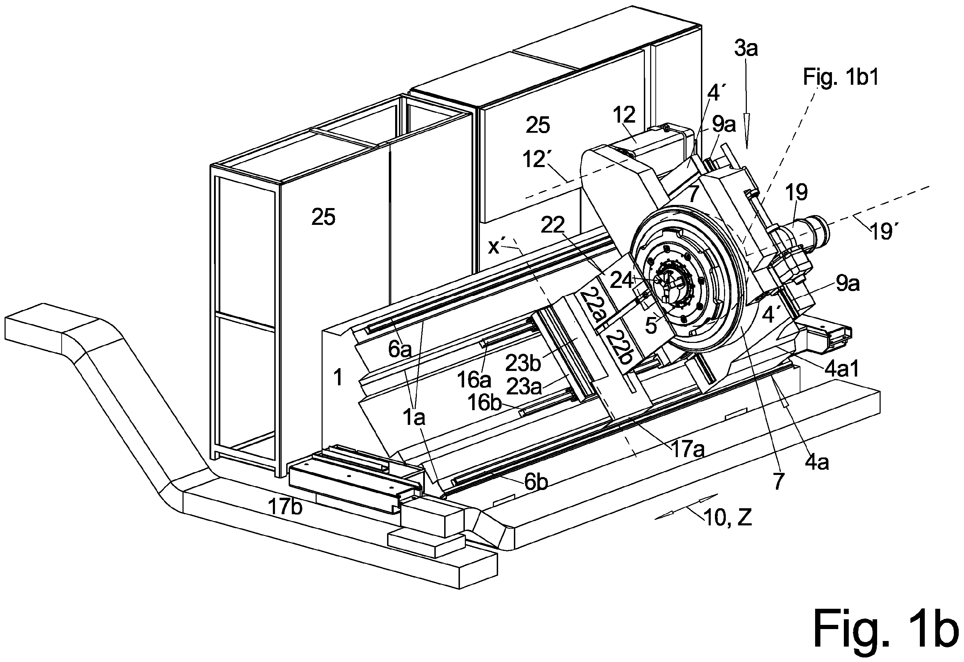

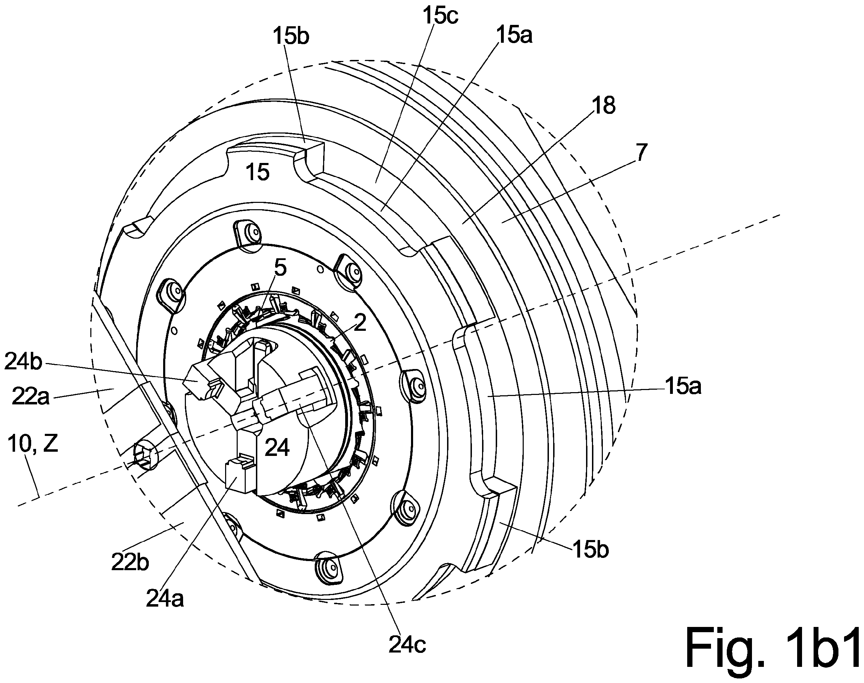

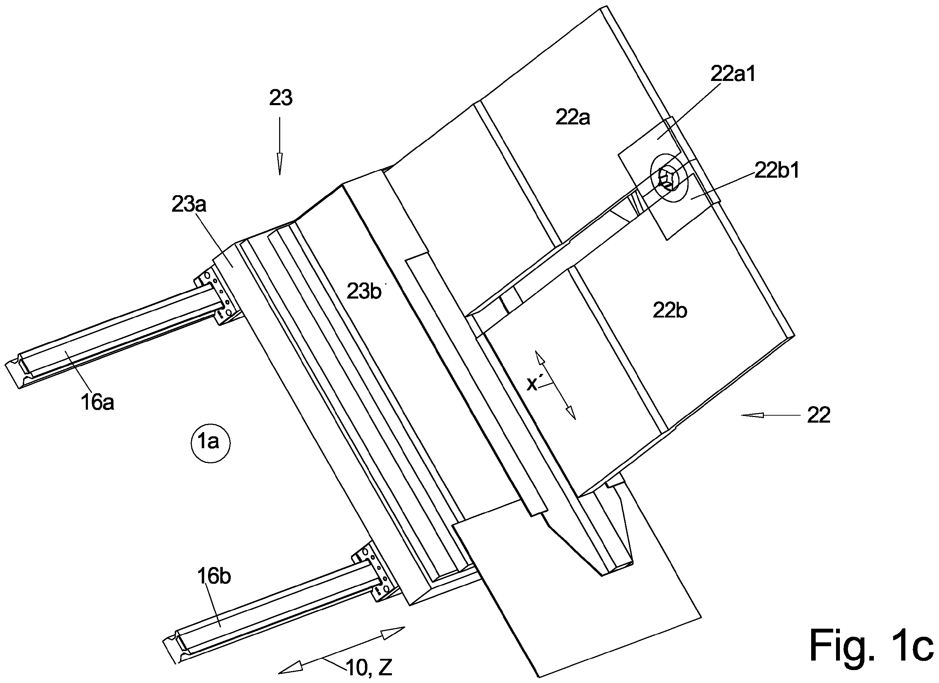

- Figur **1**a:: eine perspektivische Ansicht einer ersten Bauform der Maschine im weitgehend geschlossenen Zustand,
- Figur **1**b:: die Maschine der Figur **1**a in gleicher Ansicht ohne Arbeitsraumabdeckung, in einem nur teilweisen Aufbau,
- Figur **1**c:: eine Zusatz-Spannvorrichtung in Einzeldarstellung,
- Figur **2**:: eine perspektivische Ansicht einer zweiten, nichterfindungsgemäßen Bauform der Maschine ohne Arbeitsraum-Abdeckung,
- Figur **3**a:: eine Ansicht einer nicht-erfindungsgemäßen Maschine, die im Wesentlichen der zweiten Bauform entspricht, betrachtet in Z-Richtung von der rechten Seite gemäß Figur **2** her,

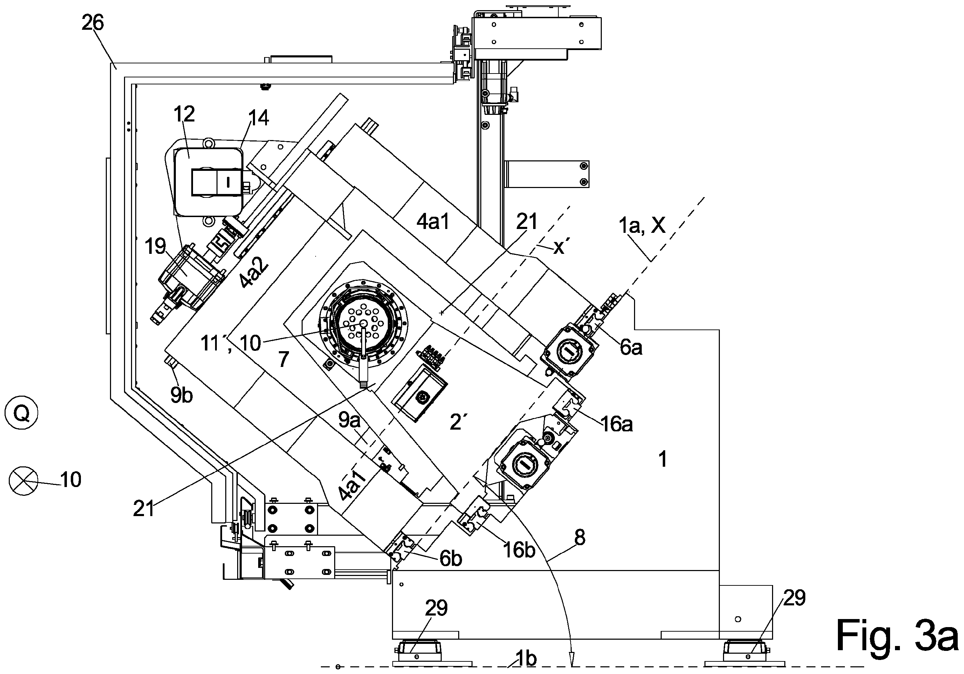

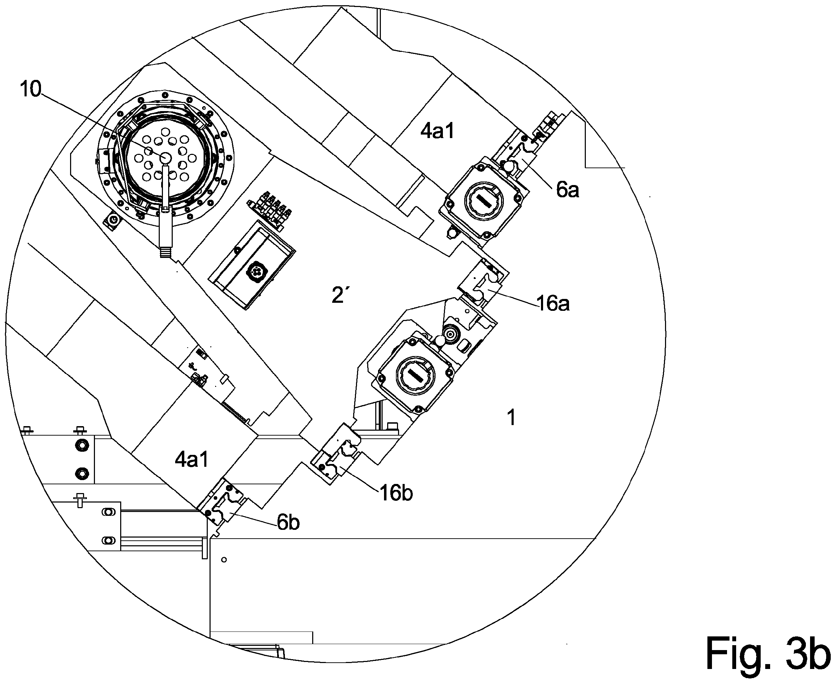

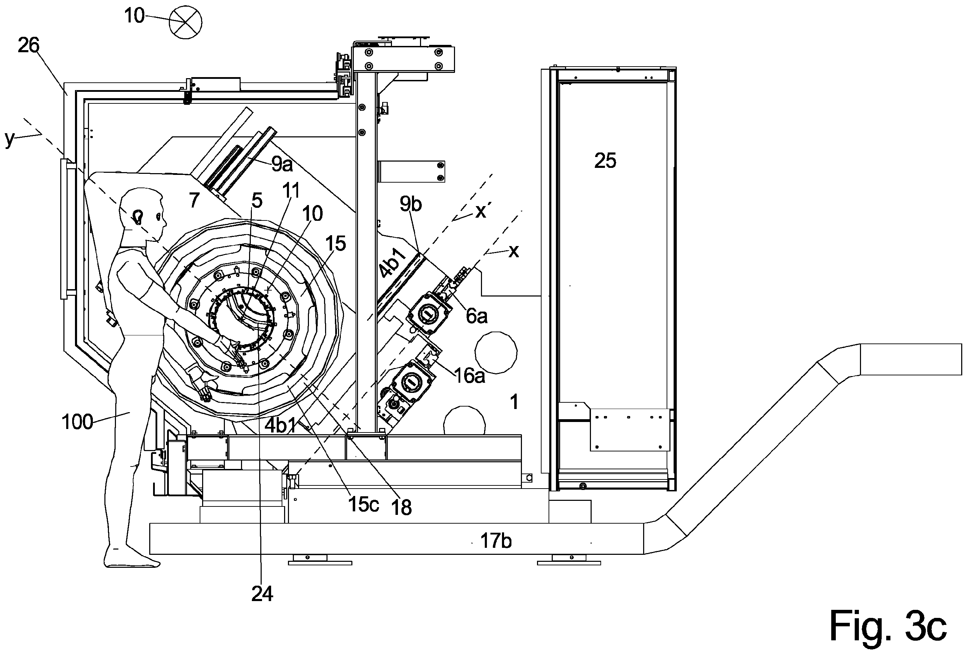

- Figur **3**b:: eine Vergrößerung aus Figur **3**a,

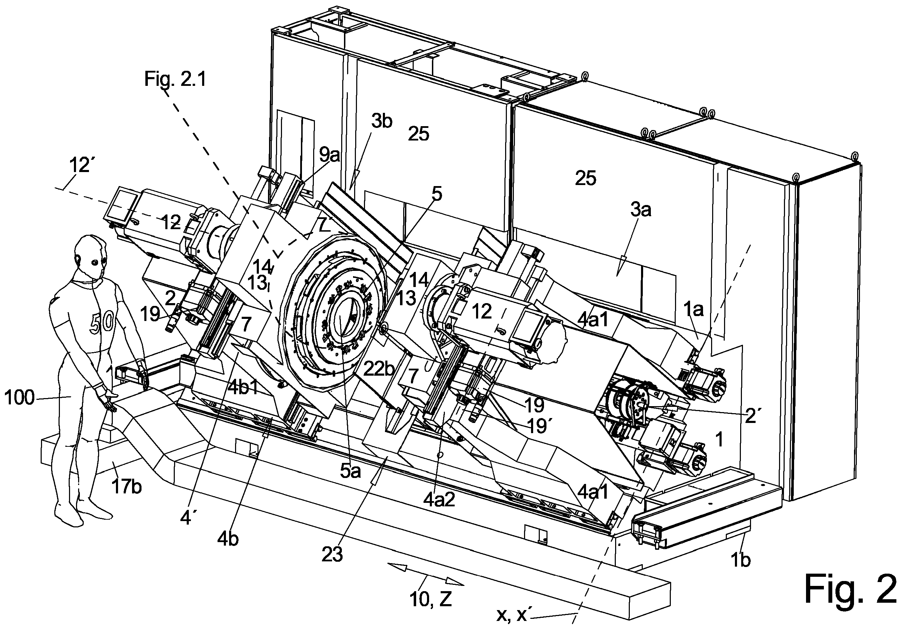

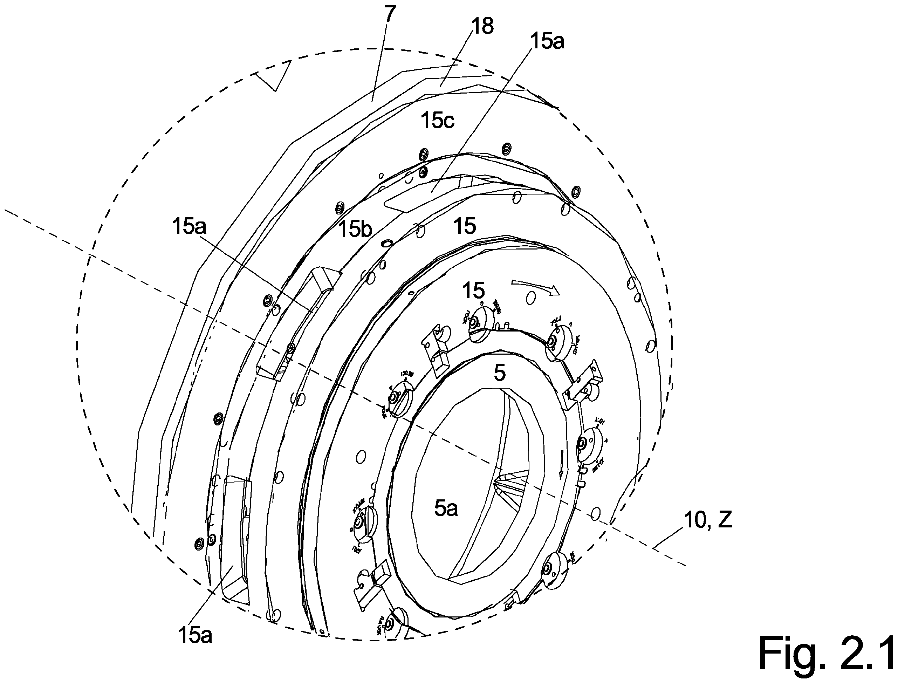

- Figur **3**c:: der in Figur **2** linke Werkzeug-Support betrachtet in Z-Richtung, in Wartungs-Position,

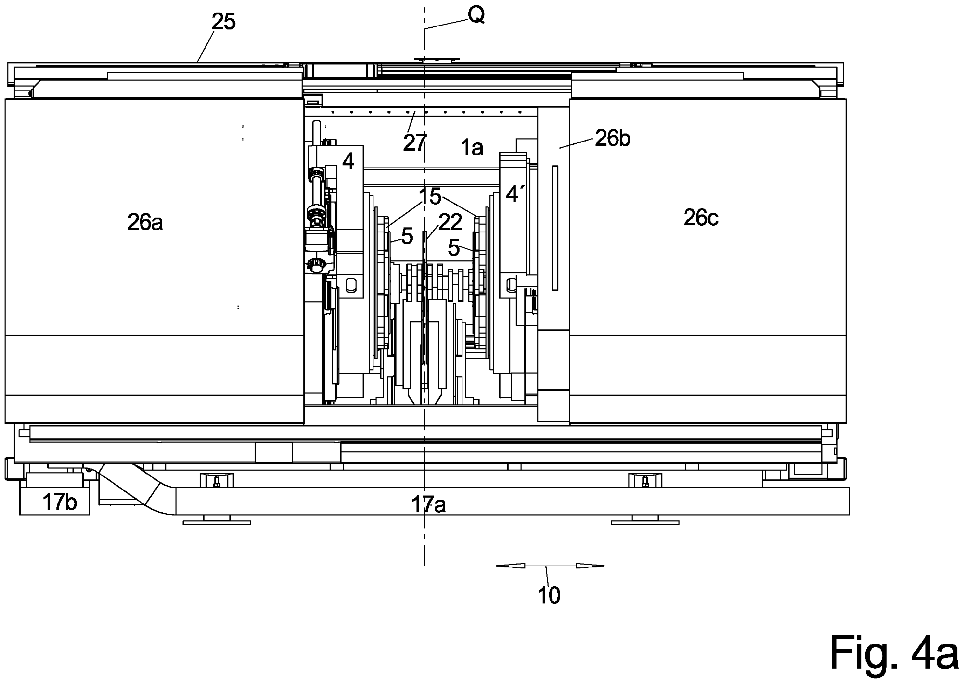

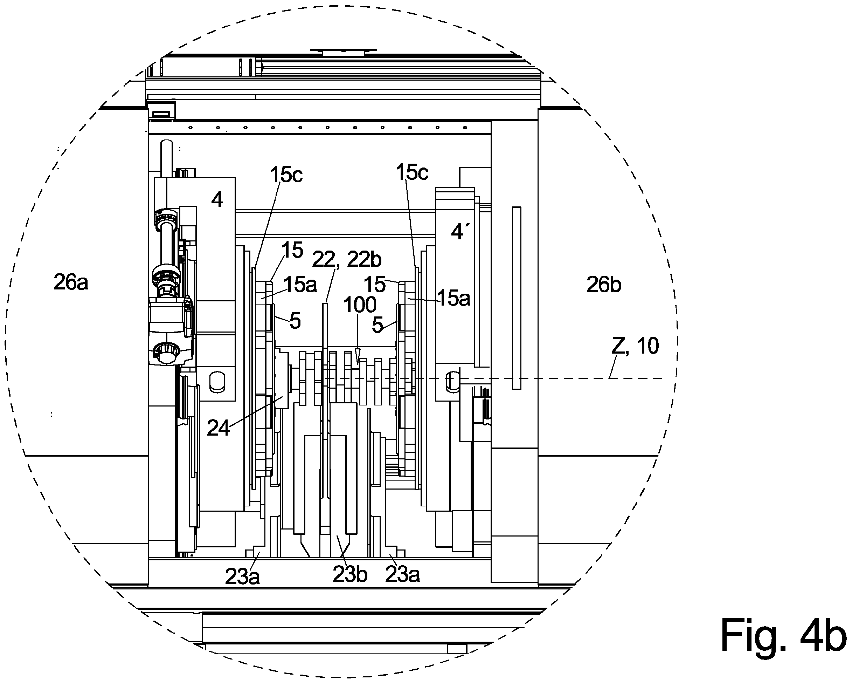

- Figur **4**a:: eine Frontansicht der Maschine, also lotrecht zur Z-Richtung genau von vorne,
- Figur **4**b:: eine Ausschnitt-Vergrößerung aus Figur **4**a.

Die dargestellte Maschine ist aufgebaut auf einem Schrägbett, also einem Maschinen-Bett **1,** das eine schräg nach vorne- der Bediener-Seite - unten abfallende Montagefläche **1**a besitzt, auf dem die weiteren Komponenten der Maschine befestigt sind, zum Teil verschiebbar in Z-Richtung, der Haupt-Erstreckungsrichtung des Bettes **1** auf Z-Führungen **6**a, b, **16**a, b wie am besten in Figur 1b zu erkennen.

Die Montagefläche **1**a des Bettes **1** ist - betrachtet in Z-Richtung **10** - zwar mehrfach abgestuft in einzelne Befestigungsflächen, jedoch besitzen die die beiden jeweils korrespondierenden Z-Führungen **6**a und **6**b bzw. **16**a und **16**b tragenden Befestigungsflächen jeweils eine Ebene mit der gleichen Neigung, dem Bettwinkel **8,** gegenüber der unteren Stützfläche **1**b des Bettes **1,** mit der sich das Bett auf dem Untergrund abstützt, welche am besten in Figur **2** oder Figur **3**a erkennbar ist:
In vollem Aufbau besitzt die Maschine - wie am besten in Figur **2** und Figur 4a, b erkennbar - zunächst nach Art einer Drehmaschine einen Spindelstock **2,** in dem das eine Ende eines Werkstückes in Form einer Welle, vorzugsweise einer Kurbelwelle **100,** gespannt und gesteuert drehbar um die Drehachse **10,** welche die Z-Richtung definiert, in der Werkstück-Spindel **2**a dieses Spindelstockes **2** aufgenommen ist.

Wie in Figur **2** erkennbar, ist häufig ein Gegen-Spindelstock **2'** vorhanden, der ebenfalls auf dem Bett **1** montiert ist, sodass die auf den beiderseitigen Werkstück-Spindeln **2**a montierten Spannfutter **24** gegeneinander gerichtet sind und jeweils eines der Enden des Werkstückes spannen und synchron drehen können.

Während der Spindelstock **2** - der in Figur 1b aus Übersichtlichkeitsgründen nicht dargestellt ist - in der Regel ortsfest auf der Montagefläche **1**a des Bettes **1** montiert ist, ist der Gegen-Spindelstock **2'** - von dem in Figur 1b lediglich das Spannfutter **24** zu erkennen ist - in der Z-Richtung, also der Richtung der Drehachse **10,** verschiebbar auf den beiden in Z-Richtung verlaufenden Z-Führungen **16** a, b, um Werkstücke unterschiedlicher Länge in der Maschine spannen und gesteuert drehen und dadurch erst mit dieser Maschine bearbeiten zu können.

An der Unterseite des Bettes **1** befinden sich in der Regel Stützfüße **29,** die in Figur **3**a dargestellt sind, und dann definieren die unteren Aufstandsflächen dieser - in der Regel in der Höhe einstellbaren - Stützfüße **29** erst die untere Stützfläche **1**b des Bettes **1,** und nur wenn solche Stützfüße **29** nicht vorhanden sind, wie beispielsweise in Figur **2** eingezeichnet, die Unterseite des Bettes **2.**

In der Bauform der Figur **2** besitzt die Maschine zwei in Z-Richtung beabstandete Werkzeug-Supporte **3**a, b, die an der jeweils gegeneinander gewandten Frontseite je einen Innen-Fräser **5** tragen, durch dessen freien inneren Durchlass **5**a sich während der Bearbeitung das Werkstück, also in der Regel die Kurbelwelle **100,** hindurch erstreckt, deren Umfang von dem Innenfräser **5** bearbeitet wird, wie in den Figuren 4a, b erkennbar.

In der Darstellung der Figur 1b ist nur ein solcher Werkzeug-Support **3**a dargestellt, was ebenfalls möglich ist.

In Figur 1b sind die beiden außerhalb, also oberhalb und unterhalb der Z-Führungen **16**a,b, auf der Montagefläche **1**a des Bettes **1** verlaufenden Z-Führungen **6**a,b gut zu erkennen, auf denen - wie besser Figur **3**a zeigt - diese eine oder auch diese beiden Werkzeug-Supporte **3**a,b, die in Z-Richtung gesteuert verfahrbar sind.

Figur **1**a zeigt die Maschine gemäß Figur 1b mit der in der Praxis vorhandenen, beweglichen Arbeitsraumabdeckung **26,** welche im geschlossenen Zustand zumindest die Oberseite und Frontseite der Maschine verschließt, und damit den Arbeitsraum, in dem sich Bett **1,** Spindelstock **2,** Gegen-Spindelstock **2',** die Werkzeug-Supporte **3**a, b und bei der Bearbeitung auch das nur in den Figur 4a, b dargestellte Werkstück **100** befinden.

Die Arbeitsraumabdeckung **26** besteht aus in der Frontansicht oder Aufsicht betrachtet in Z-Richtung nebeneinanderliegenden, aneinander anschließenden Streifen **26**a, b, c, die sich in Z-Richtung entlang entsprechender, an einem vom Maschinenbett getragenen Maschinengestell befestigter Führungen so verfahren lassen, dass sich zumindest je zwei, besser alle vorhandenen Streifen **26**a, b, c ineinander bzw. untereinander geschoben im gleichen Längenbereich der Z-Richtung befinden, sodass zumindest der mittlere Arbeitsbereich der Maschine - wie Figur 4a, B dargestellt, vorzugsweise der gesamte übrige Längenbereich in Z-Richtung der Maschine offen liegt für Wartungs- oder Reparaturarbeiten.

Im vorliegenden Fall ist in einem der Streifen **26**b, vorzugsweise dem in der verschließenden Stellung mittleren Streifen, auf der Frontseite ein Sichtfenster eingearbeitet, durch welches der Bediener die Abläufe im Arbeitsraum auch während der Bearbeitung sehen kann.

Ferner ist in der Oberseite wenigstens eines der - betrachtet in Z-Richtung etwa winkelförmig gekröpften - Streifen eine Klappe **27** über der Drehachse **10** vorhanden, die in Z-Richtung so groß ist, dass bei geöffneter einer oder mehrerer aneinander anschließenden Klappen **27** ein Werkstück von oben her in den Arbeitsraum der Maschine abgesenkt und in der Maschine gespannt werden kann, ohne die Streifen **26**a, b, c der Arbeitsraumabdeckung **26** in Z-Richtung aus der geschlossenen Stellung verfahren zu müssen.

Die Figuren **1**a und b lassen ferner auch gut den Späneförderer **17** erkennen:
Nicht nur die in Figur 1b erkennbaren Vertiefungen mit Absätze in der Montagefläche **1**a des Bettes **1,** sondern auch die Z-Führungen **6**a, b, **16**a, b sind im Betrieb der Maschine mit - nicht dargestellten - Abdeckungen überdeckt, die zum Teil mit den in Z-Richtung beweglichen Komponenten wie Werkzeug-Supporten **3**a, b und Gegen-Spindelstock **2**' mitbewegt werden, und eine im Wesentlichen ebene, schräg nach vorne unten abfallende Oberseite besitzen, auf welche die während der Bearbeitung entstehenden, sehr heißen, Späne fallen und in Richtung Unterkante dieser Fläche nach unten rutschen.

Der Späne-Längs-Förderer **17**a erstreckt sich in Z-Richtung verlaufend unterhalb dieser Vorderkante, sodass die von der Vorderkante herabfallenden Späne in den oben offenen Späne-Längs-Förderer **17**a fallen und von diesem zu einem seiner Enden transportiert und dort an einen Späne-Quer-Förderer **17**b übergeben werden, der die Späne entlang einer der Stirnseiten der Maschine nach hinten fördert und in einen nicht dargestellten Späne-Sammelbehälter abwirft.

Wie vor allem Figur **1**a gut erkennen lässt, befindet sich - in der Aufsicht betrachtet - zumindest der Späne-Längs-Förderer **17**a vollständig und der Späne-Quer-Förderer **17**b teilweise innerhalb der in der Aufsicht betrachteten Gesamtabmessungen der restlichen Maschine, sodass der Raumbedarf für die Maschine durch die Späneförderer nicht vergrößert wird, bis auf das eventuell nach hinten über die Grundfläche der Maschine vorstehende Abwurf-Ende des Späne-Quer-Förderers **17**b, dessen Gestaltung und Auskragung jedoch von den örtlichen Verhältnissen am Aufstellungsort abhängt.

Wie am besten die Figuren **2** sowie **3**a, c zeigen, besteht jeder Werkzeug-Support **3**a,b aus einem Z-Schlitten **4**a bzw. **4**b, der - in der Aufsicht auf die Montagefläche **1**a betrachtet - zwei Seitenteile **4**a**1**, **4**b**1** aufweist, die sich von der Frontfläche **4**' des Z-Schlittens **4**a oder **4**b aus in Z-Richtung von der Rückseite des jeweiligen Z-Schlittens **4**a oder **4**b weg erstrecken und mit ihren Unterseiten auf je einer der Z-Führungen **6**a,b laufen, wie am besten in Figur **3**a und der Vergrößerung **3**b zu erkennen.

Die beiden Seitenteile **4**a**1**, **4**b**1** sind in ihrer Seitenansicht betrachtet dreieckig oder L-förmig gestaltet, und ragen an oder nahe der Frontfläche **4**' von den Führungen **6**a, b nach oben auf, und sind am oberen Ende über ein Joch **4**a**2**, **4**b**2** miteinander zu einem Portal verbunden, wobei die in Richtung des jeweils anderen Werkzeug-Supportes **3**ba, b gerichtete Frontfläche **4**' jedes Z-Schlittens **4**a oder **4**b durch die, insbesondere zueinander fluchtenden, Frontflächen des Joches **4a2**, **4**b**2** und der Seitenteile **4**a**1**, **4**b**1** gebildet wird.

Lotrecht zur Drehachse **17** ist an der Frontfläche **4'** jedes Z-Schlittens **4**a oder **4**b ein Querschlitten **7** entlang von Querführungen **9** a, b geführt, von denen die obere **9**a meist an der Frontfläche **4'** im Bereich des Joches **4**a**2**, **4**b**2** befestigt ist und die untere - die bezüglich der Drehachse **10** gegenüberliegt - entlang der Frontfläche **4'** von dem einen Seitenteil **4**a**1** zu dem anderen Seitenteil **4**a**2** verläuft, also den Freiraum des portalförmigen Z-Schlittens **4**a bzw. b kreuzt.

Der zwischen dem oberen Joch z.B. **4**a**2** und der unteren Querführung **9**b verbleibende Durchlass muss groß genug sein, um zumindest das Spannfutter **24** in Z-Richtung hindurch treten zu lassen, besser auch die daran anschließende Werkstück-Spindel **2** und/oder Gegen-Spindel **2**' und/oder die Kurbelwelle **100.** Dadurch können die beiden Z-Schlitten **4**a bzw. **4**b so weit in Z-Richtung zu dem benachbarten Spindelstock **2** oder Gegen-Spindelstock **2'** verfahren werden, dass der Bereich zwischen den gegeneinander gerichteten Spannfuttern **24** und einschließlich zumindest des Z-Bereichs der Spannbacken dieser Spannfutter **24** frei ist zum Einsetzen eines Werkstückes wie etwa einer Kurbelwelle **100** von oben oder von vorne zwischen zwei Spannfutter **24.**

In diesem Querschlitten **7** ist der ringförmige Innenfräser **5** drehbar gelagert, und durch Verfahren des Querschlittens **7** in Verfahr-Richtung X' wird der Innen-Fräser **5** in Kontakt zum Außenumfang des zu bearbeitenden Durchmessers des Werkstückes gebracht, und wenn der Durchmesser exzentrisch zur Drehachse **10** liegt, wie beispielsweise das Hublager einer auf der Hauptlager-Achse in der Maschine gespannten Kurbelwelle, muss zusammen in Abstimmung mit der Drehbewegung des Werkstückes die Querbewegung des Querschlittens **7** in Verfahr-Richtung X' gesteuert werden.

Natürlich muss auch der freie innere Durchlass des Innen-Fräsers **5** groß genug sein, um zumindest das Spannfutter **24** in Z-Richtung hindurch treten zu lassen, besser auch die daran anschließende Werkstück-Spindel **2** und/oder Gegen-Spindel **2'** und/oder die Kurbelwelle **100,** wie in Figur **1**b**1** dargestellt.

Im Fall der Figuren 2, 3a und 3c verläuft die Verfahr-Richtung X' parallel zur Erstreckungsrichtung X der Montagefläche **1**a, betrachtet in Richtung der Drehachse 10, was nicht der Erfindung entspricht. Erfindungsgemäß verläuft die Verfahr-Richtung X' zur Erstreckungsrichtung X in einem spitzen Winkel, der höchstens 45° beträgt.

Wie die Figuren **1**b**1** und **2** sowie die Frontansicht der Figur 4a, b, und am besten Figur **2****.****1** erkennen lassen, ist der Innen-Fräser **5** mit seinem freien Durchlass **5**a am Außenumfang in einer ringförmigen Speichenplatte **15** drehfest aufgenommen, die in Z-Richtung vor der Frontfläche **7'** des Quer-schlittens **7** positioniert ist, und von der aus über den Umfang verteilt speichenförmig Abstandshalter **15**b nach hinten abragen und mit einem dortigen, gegenüber der Speichenplatte **15** in Z-Richtung versetzten, Rotationsring **15**c fest verbunden sind.

Erst dieser Rotationsring **15**c ist an seinem Außenumfang mittels eines Fräserlagers **18** in dem Querschlitten **7** drehbar gelagert.

Die in Umfangsrichtung vorhandenen, in radialer Richtung freien Durchlässe **15**a zwischen den Abstandshaltern **15**b dienen dazu, die in den Bereich radial innerhalb des Ringes aus Abstandshaltern gelangenden Fräs-Späne nach unten aus diesem Ring herausfallen zu lassen, was wegen der umlaufenden Abstandshalter **15**b sehr schnell und mit einer geringen Verweilzeit der Fräs-Späne auf den Abstandshaltern **15**b erfolgt.

Da der Innen-Fräser **5** jeweils eine hohe Antriebsleistung und einen deshalb relativ großen Fräser-Motor **12** benötigt, und der Querschlitten **7** einen X-Motor **19** für die Verschiebung in Verfahr-Richtung X', muss auch die Anordnung dieser Elektromotoren und der zusätzlich nötigen Getriebe so gewählt werden, dass diese sowohl eine gute Zugänglichkeit für Wartungs- und Reparaturzwecke ermöglichen, bei der Bearbeitung nicht stören und der vor allem große und schwere Fräser-Motor **12** die Lage des Schwerpunkts **21** der Maschine und insbesondere des Werkzeug-Supports - wie er beispielhaft in Figur **3**a eingezeichnet ist - nicht negativ beeinflusst, denn er soll in der Aufsicht betrachtet innerhalb der Grundfläche des Maschinenbettes **1** liegen.

Genau in diesem Punkt unterscheidet sich die Ausführungsform der Figur **1**b von denjenigen der Figuren **2** und 3a-c:
Der Fräser-Motor **12** ist in der Lösung gemäß Figur 1b mit seiner Antriebsachse **12'** parallel zur Z-Richtung angeordnet. Das Fräser-Getriebe **13** sitzt in einem Getriebe-Fortsatz **14** des Querschlittens **7,** der in Verfahr-Richtung vom unteren Bereich der Hinterkante des Querschlittens **7** in Verfahr-Richtung X' von der Fräser-Achse **5'** nach hinten in Richtung der Schaltschränke **25** abragt, wobei der Getriebe-Fortsatz **14** über die Oberkante des Z-Schlittens **4**a,b aufragt, sodass sich auch der Fräser-Motor **12** über das obere Ende des benachbarten Z-Schlittens **4**a oder **4**b, insbesondere dessen Portal **4**a**1**, hinweg erstreckt.

Der Fräser-Motor **12** ist an der von diesem Getriebe-Fortsatz **14** nach hinten, also zum benachbarten Spindelstock oder Gegen-Spindelstock, hier den Gegen-Spindelstock **2',** abragend befestigt und verläuft damit hinter dem Z-Schlitten **4**a in einem solchen Abstand in Verfahr-Richtung X' vorbei, dass der Querschlitten **7** jede benötigte Querposition gegenüber dem Z-Schlitten **4**a einnehmen kann.

Der X-Motor **19** ist vorzugsweise an der vom Querschlitten **7** abgewandten Rückseite des Z-Schlittens **4**a angeordnet, wobei seine Antriebsachse **19'** ebenfalls parallel zur Drehachse **10** verläuft.

Zur Verbesserung der Zugänglichkeit ist in der Bauform der Figur **2** sowie **3**a,c der Getriebe-Fortsatz **14,** in dem sich das Fräser-Getriebe **13** befindet, dagegen nach schräg oben vorne hinausragend an der Oberseite des Quer-schlittens **7** angeordnet. Der Fräser-Motor **12** sitzt auch in diesem Fall mit gleicher Orientierung seiner Antriebsachse an der Rückseite dieses Fräser-Fortsatzes **14,** sodass der Fräser-Motor **12** auf diese Art und Weise weiter vorne in Richtung Bedienerseite und auch etwas niedriger positioniert ist.

Der X-Motor **19** ist in diesem Fall ebenfalls an der Rückseite des Z-Schlittens **4**a, und zwar an der Rückseite des von dessen Joch **4**a**2**, befestigt, allerdings mit seiner Antriebsachse **19'** in Verfahr-Richtung X' verlaufend.

Während in Figur **2** der Getriebe-Fortsatz **14,** betrachtet in Z-Richtung, eine rechteckige Kontur besitzt, ist in den Figuren 3a, c dieser Getriebe-Fortsatz **14,** wiederum betrachtet in Z-Richtung, mit einer etwa dreieckigen, mit der Basis des Dreiecks in Verfahr-Richtung X' verlaufenden, Kontur dargestellt. Dabei wird die Form und Größe des Getriebe-Fortsatzes **14** von den Abmessungen des darin unterzubringenden Fräser-Getriebes **13** bestimmt, welches benötigt wird, um den Innen-Fräser **5** mit der richtigen Drehzahl und dem richtigen Drehmoment vom Fräser-Motor **12** aus anzutreiben.

Unabhängig von der Bauform soll jedoch gelten - wie Figur **3**a betrachtet in Z-Richtung, der Drehachse **10** dargestellt - dass ein von der Fräser-Mitte **11"** auf die X-Richtung gefälltes Lot **30** einen Fußpunkt **30**a des Lotes ergibt, der in allen Betriebszuständen der Maschine in der Aufsicht betrachtet noch im Zwischenraum zwischen den beiden Z-Führungen **6**a, b für die Werkzeug-Supporte liegt.

Um eine hohe Bearbeitungsgenauigkeit zu erreichen, wird üblicherweise das Werkstück während der Bearbeitung zusätzlich in Z-Richtung möglichst nahe neben der Bearbeitungsstelle durch eine Zusatz-Spannvorrichtung **22** abgestützt, wie sie in Figur **2** als auch den Figuren 1b in der Maschine und in der Figur 1c als einzelne Komponente in einer spezifischen Bauform dargestellt ist:
Das Werkstück, meist eine Kurbelwelle **100,** wird dabei zwischen zwei Spannteilen geklemmt, wobei hier als Spannteile zwei Spannplatten **22**a, b verwendet werden, die lotrecht zur Drehachse **10** und in Verfahr-Richtung X' beabstandet zueinander liegen, sodass durch Gegeneinanderfahren ihrer Schmalseiten das Werkstück dazwischen geklemmt werden kann. Dafür ist - siehe Figur 1c - in jeder der Spannplatten **22**a, b eine prismenförmige Aufnahme **22**a**1**, **22**b**1** zur Anlage an je einer Seite der Kontur des zu spannenden Werkstück-Durchmessers vorgesehen, deren Kontaktflächen mit einer Gleit-Beschichtung versehen sind, da bei der Bearbeitung die Kurbelwelle **100** dreht und auf den Kontaktflächen der gegeneinander gepressten Aufnahmen gleiten können muss.

Die beiden Spanplatten **22**a, b sind auf einem Zusatz-Schlitten **23** aufgebaut, der einen Spann-Z-Schlitten **23**a umfasst, welcher in Z-Richtung entlang der zweiten Z-Führungen **16**a, b gesteuert verfahren wird, und auf dem ein Spann-X-Schlitten **23**b in X-Richtung oder in Verfahr-Richtung X' gesteuert verfahren wird, der die beiden Spanplatten **22**a, b trägt.

Beide Spannplatten **22**a, b sind in X-Richtung oder Verfahr-Richtung X' auf dem Spann-X-Schlitten **23** verfahrbar.

### BEZUGSZEICHENLISTE

- **1**: Bett
- **1**a: Montagefläche
- **1**b: Stützfläche
- **2**: Spindelstock
- **2**': Gegen-Spindelstock
- **2**a: Werkstück-Spindel
- **3**a, b: Werkzeug-Support
- **4**a, b: Portal-Schlitten, Z-Schlitten
- **4**a**1**,**4**b**1**: Seitenteil
- **4**a**2**, **4**b**2**: Joch
- **4**': Frontfläche
- **5**: Innen-Fräser
- **5**': Fräser-Achse
- **5**a: freier Durchlass
- **6**a, b: erste Z-Führung
- **7**: Querschlitten
- **7**': Frontfläche
- **8**: Bett-Winkel
- **9**a, b: Quer-Führung
- **10**: Dreh-Achse, Z-Richtung
- **11**: Fräser-Achse
- **11**': Fräser-Mitte
- **12**: Fräser-Motor
- **12'**: Antriebs-Achse
- **13**: Fräser-Getriebe
- **14**: Getriebe-Fortsatz
- **15**: Speichenplatte
- **15**a: freier Durchlass
- **15**b: Abstandshalter
- **15**c: Rotations-Ring
- **16**a, b: zweite Z-Führung
- **17**a: Späne-Längs-Förderer
- **17**b: Späne-Quer-Förderer
- **18**: Fräser-Lager
- **19**: X-Motor
- **19**': Antriebs-Achse
- **20**: Querebene
- **21**: Schwerpunkt
- **22**: Zusatz-Spannvorrichtung
- **22**a, b: Spannteil, Spannplatte
- **22**a**1**/b**1**: Aufnahme
- **23**a: Spann-Z-Schlitten
- **23**b: Spann-X-Schlitten
- **24**: Spannfutter
- **25**: Schaltschrank
- **26**: Arbeitsraum-Abdeckung
- **26** a, b: Streifen
- **27**: Klappe
- **29**: Stützfuß
- **30**: Lot
- **30**a: Fußpunkt

- X: Erstreckungsrichtung der Montagefläche
- X': Verfahr-Richtung
- Y: zweite Querrichtung, lotrecht zur Verfahrrichtung X'

## Patentansprüche

1. Innenfräs-Maschine, zum Bearbeiten von während der Bearbeitung drehenden Werkstücken mit einem Innen-Fräser, mit
- wenigstens einem Spindelstock **(2)** mit einer gesteuert um eine Dreh-Achse **(10),** die in Z-Richtung verläuft, drehbaren Werkstück-Spindel (**2**a),
- einem Bett **(1)** mit einer sich in Z- und X-Richtung erstreckenden Montagefläche (**1**a) für den wenigstens einen Spindelstock **(2)** und einer unteren Stützfläche (**1**b),
- wobei die Montagefläche (**1**a) gegenüber der Stütz-Fläche (**1**b) um einen Bett-Winkel **(8)** von hinten nach vorne abfallend geneigt ist,
- wenigstens einem Werkzeug-Support (**3**a) mit
- einem in Z-Richtung entlang des Bettes **(1)** auf ersten Z-Führungen (**6**a, b) verfahrbaren Z-Schlitten (**4**a),
- einem entlang des Z-Schlittens (**4**a) in einer, vorzugsweise nur einer, quer zur Z-Richtung verlaufenden Verfahr-Richtung (X') entlang von Quer-Führungen (**9**a, b) verfahrbaren Querschlitten **(7),**
- einem ringförmigen Innen-Fräser **(5),** der um die in Z-Richtung verlaufende Fräser-Achse **(11)** drehbar gelagert und von einem Fräser-Antrieb antreibbar ist,
- wobei im Z-Schlitten (**4**a) ein in Z-Richtung offener Z-Durchlass ausgebildet ist,
**dadurch gekennzeichnet, dass**
- der Z-Schlitten (**4**a) als portalförmiger Portal-Schlitten (**4**a) ausgebildet ist und mit den beiden unteren Enden seiner beiden frei endenden Schenkel an den ersten Z-Führungen (**6**a, b) entlang des Bettes (**1**) geführt ist,
- die Verfahr-Richtung (X') des Querschlittens **(7)** entlang des Portal-Schlittens (**4**a) gegenüber der X-Richtung um einen Zusatz-Winkel von höchstens **45°** geneigt ist.

2. Maschine nach Anspruch **1,**
**dadurch gekennzeichnet, dass**
der Zusatz-Winkel höchstens **30°,** besser höchstens **15°,** besser höchstens **5°** beträgt.

3. Maschine nach einem der vorhergehenden Ansprüche,
**dadurch gekennzeichnet, dass**
- ein zweiter Spindelstock, der Gegen-Spindelstock **(2'),** vorhanden ist, der in Z-Richtung entlang des Bettes **(1)** verfahrbar ist entlang von zweiten Z-Führungen (**16**a, b) und
- insbesondere die zweiten Z-Führungen **(16** a, b) innerhalb der ersten Z-Führungen (**6**a, b) angeordnet sind.

4. Maschine nach einem der vorhergehenden Ansprüche,
**dadurch gekennzeichnet, dass**
- die Quer-Führungen (**9**a, b) bezüglich der Dreh-Achse **(10)** einander gegenüber liegend angeordnet sind.

5. Maschine nach einem der Ansprüche **1** bis **4,**
**dadurch gekennzeichnet, dass**
- betrachtet in Z-Richtung bei einem von der Fräser-Mitte (**11**') auf die X-Richtung gefällten Lot **(30)** der Fußpunkt (**30**a) dieses Lotes **(30),** zumindest während der Bearbeitung, vorzugsweise in überhaupt keinem regulären Funktions-Zustand der Innenfräsmaschine, außerhalb des Zwischenraumes zwischen den Z-Führungen (**6**a, b) für den Werkzeug-Support liegt.

6. Maschine nach einem der vorhergehenden Ansprüche,
**dadurch gekennzeichnet, dass**
- ein zweiter Werkzeug-Support (**3**b) vorhanden ist, der analog zum Werkzeug-Support (**3**a) ausgebildet ist und ebenfalls in Z-Richtung und vorzugsweise entlang der gleichen ersten Z-Führungen (**6**a, b) entlang des Bettes **(1)** verfahrbar ist und
- insbesondere jeder der beiden Querschlitten **(7)** vor der jeweiligen, zu dem jeweils anderen Werkzeug-Support (**3**a, b) hinweisenden Frontfläche **(4')** des ihn tragenden Portal-Schlittens (**4**a, b) angeordnet ist.

7. Maschine nach einem der vorhergehenden Ansprüche,
**dadurch gekennzeichnet, dass**
der Bett-Winkel **(8)** zwischen **40°** und **60°** beträgt, insbesondere zwischen **45°** und **55°** beträgt, insbesondere zwischen **48°** und **52°** beträgt.

8. Maschine nach einem der vorhergehenden Ansprüche,
**dadurch gekennzeichnet, dass**
- der Fräser-Antrieb einen Fräser-Motor **(12)** sowie ein Fräser-Getriebe **(13)** umfasst und das Fräser-Getriebe **(13)** in einem Getriebe-Fortsatz **(14)** angeordnet ist, der vom Rest des Quer-Schlittens **(7)** in einer Querrichtung zur Z-Richtung, insbesondere der lotrecht auf der Verfahr-Richtung (X') stehenden Y-Richtung, abragt und/oder in Z-Richtung nicht breiter ist als der Rest des Quer-Schlittens **(7),** insbesondere der Frontplatte (**7**a) des Quer-Schlittens **(7)** und
- insbesondere der Fräser-Motor **(12)** in der Aufsicht betrachtet vor der Fräser-Achse **(11)** und/oder oberhalb der Fräser-Achse **(11)** angeordnet ist

9. Maschine nach einem der vorhergehenden Ansprüche,
**dadurch gekennzeichnet, dass**
die Quer-Führungen (**9**a, b) am Z-Schlitten (**4**a, b) so positioniert und so lang ausgebildet sind, dass der X-Schlitten (**7**) soweit nach vorne und unten verfahren werden kann, dass die Dreh-Achse **(10)** außerhalb des freien inneren Durchmessers des Innen-Fräsers **(5)** liegt.

10. Maschine nach einem der vorhergehenden Ansprüche,
**dadurch gekennzeichnet, dass**
- der Innen-Fräser **(5)** in einem Durchlass (**15**a) einer in der Querebene **(20)** zur Z-Richtung sich erstreckenden Speichenplatte **(15)** drehfest angeordnet ist, und die Speichenplatte **(15)** über ihren Umfang verteilt mehrere in Z Richtung verlaufende Abstandshalter (**15** b) aufweist, mit deren freien Enden sie an einem Rotations-Ring (**15**c) drehfest befestigt ist, der mittels eines Fräser-Lagers **(18)** um die Fräserachse **(11)** im Quer-Schlitten **(7)** gelagert ist
und/oder
- der Innen-Fräser **(5),** insbesondere die Speichenplatte **(15),** gegenüber dem Quer-Schlitten **(7)** mittels eines YRT-Lagers gelagert ist.

11. Maschine nach einem der vorhergehenden Ansprüche,
**dadurch gekennzeichnet, dass**
- in der Aufsicht betrachtet vor der Vorderkante des Bettes **(1)** ein Späne-Längs-Förderer (**17**a) angeordnet ist und insbesondere von dessen Ende ein Späne-Quer-Förderer (**17** b) entlang einer der Stirnseiten des Bettes **(1)** verläuft und
- insbesondere der Späne-Längs-Förderer (**17**a) und/oder der Späne-Quer-Förderer (**17**b) in der Aufsicht betrachtet vollständig innerhalb der maximalen Erstreckung des Restes der Maschine in Z-Richtung und der dazu horizontalen Querrichtung liegt.

12. Maschine nach einem der vorhergehenden Ansprüche,
**dadurch gekennzeichnet, dass**
die Maschine so gestaltet und dimensioniert ist, dass der Schwerpunkt **(21)** der gesamten Maschine einschließlich des Bettes **(1)** innerhalb der Grundfläche des Bettes **(1)** liegt.

13. Maschine nach einem der vorhergehenden Ansprüche,
**dadurch gekennzeichnet, dass**
- eine Zusatz-Spannvorrichtung **(22)** vorhanden ist, die auf einem Zusatz-Z-Schlitten (**23**a) in Z-Richtung entlang der Montagefläche (**1**a) des Bettes **(1)** auf Führungen, insbesondere den zweiten Z-Führungen **(16** a, b) verfahrbar ist,
und/oder
- die Zusatz-Spannvorrichtung **(22)** zwei in der Quer-Ebene **(20)** relativ zueinander bewegliche Spann-Teile **(22** a, b), insbesondere sich in der Quer-Ebene **(20)** erstreckende Spann-Platten **(22** a, b), umfasst, die von einem auf dem Zusatz-Z-Schlitten (**23**a) in Querrichtung verfahrbaren Zusatz-X-Schlitten (**23**b) aus in Richtung Dreh-Achse **(10)** abragen und
- die beide verfahrbar in einer Quer-Richtung zur Z-Richtung, insbesondere der X-Richtung oder der X'-Richtung, am Zusatz-X-Schlitten (**23**b) befestigt sind.

14. Maschine nach einem der vorhergehenden Ansprüche,
**dadurch gekennzeichnet, dass**
der freie innere Durchlass (**5**a, **15**a) des Innen-Fräsers **(5)** und/oder der Speichenplatte **(15)** größer ist als der Außendurchmesser des Spannfutters **(24)** und insbesondere größer als der Außendurchmesser der Werkstück-Spindel (**2**a).

15. Maschine nach einem der vorhergehenden Ansprüche,
**dadurch gekennzeichnet, dass**
der X-Motor **(19)** zum Antrieb des Quer-Schlittens **(7)** in der Aufsicht betrachtet vor der Fräser-Achse **(11)** und vorzugsweise oberhalb der Fräser-Achse **(11)** angeordnet ist, insbesondere auf der Oberseite des Z-Schlitten (**4**a, b) oder des Quer-Schlittens **(7),** angeordnet ist.

## Claims

1. Internal milling machine for machining workpieces that rotate during machining, having an internal milling cutter, with
- at least one headstock **(2)** with a workpiece spindle (**2**a) rotatable in a controlled manner about an axis of rotation **(10)** running in the Z-direction,
- a bed **(1)** with a mounting surface (**1**a) for the at least one headstock **(2)** extending in the Z- and X-directions and a lower support surface (**1**b),
- wherein the mounting surface (**1**a) is inclined relative to the support surface (**1**b) by a bed angle **(8)** sloping downwards from the rear to the front,
- at least one tool support (**3**a) with
- a Z-slide (**4**a) movable in the Z-direction along the bed **(1)** on first Z-guides (**6**a, b),
- a cross slide **(7)** movable along the Z-slide (**4**a) in one, preferably only one, direction of travel (X') transverse to the Z-direction along transverse guides (**9**a, b),
- an annular internal milling cutter **(5)** which is rotatably mounted about the milling cutter axis **(11)** running in the Z-direction and driveable by a milling cutter drive,
- a Z-passage open in the Z-direction being formed in the Z-slide (**4**a), **characterised in that**
- the Z-slide (**4**a) is configured as a portal-shaped portal slide (**4**a) and is guided along the bed **(1)** by the two lower ends of its two free-ending legs on the first Z-guides (**6**a, b),
- the direction of travel (X') of the cross slide **(7)** along the portal slide (**4**a) is inclined by an additional angle of no more than **45°** relative to the X-direction.

2. Machine according to claim **1,**
**characterised in that**
the additional angle is no more than **30°,** preferably no more than **15°,** preferably no more than **5°.**

3. Machine according to any of the preceding claims,
**characterised in that**
- a second headstock, the counter-headstock **(2'),** is provided, that is moveable in the Z-direction along the bed **(1)** along second Z-guides (**16**a, b), and
- in particular the second Z-guides (**16**a, b) are arranged inside the first Z-guides (**6**a, b).

4. Machine according to any of the preceding claims,
**characterised in that**
- the transverse guides (**9**a, b) are arranged opposite one another relative to the axis of rotation (**10**).

5. Machine according to any of claims **1** to **4**,
**characterised in that**
- viewed in the Z-direction, with a plumb bob **(30)** dropped in the X-direction from the milling cutter centre (**11**'), at least during machining, preferably with the internal milling machine in no regular functional state whatsoever, the base point (**30**a) of this plumb bob **(30)** lies outside the space between the Z-guides (**6**a, b) for the tool support.

6. Machine according to any of the preceding claims,
**characterised in that**
- a second tool support (**3**b) is provided which is designed analogously to the tool support (**3**a) and is also moveable in the Z-direction and preferably along the same first Z-guides (**6**a, b) along the bed **(1),** and
- in particular each of the two cross slides **(7)** is arranged in front of the respective front surface **(4')** of the portal slide (**4**a, b) carrying it and facing towards the respective other tool support (**3**a, b).

7. Machine according to any of the preceding claims,
**characterised in that**
the bed angle **(8)** is between **40°** and **60°,** in particular between **45°** and **55°,** in particular between **48°** and **52°.**

8. Machine according to any of the preceding claims,
**characterised in that**
- the milling cutter drive comprises a milling cutter motor **(12)** and a milling cutter gear **(13)** and the milling cutter gear **(13)** is arranged in a gear extension **(14)** which projects from the rest of the cross slide **(7)** in a transverse direction to the Z-direction, in particular the Y-direction perpendicular to the direction of travel (X'), and/or is not wider in the Z-direction than the rest of the cross slide **(7),** in particular the front plate (**7**a) of the cross slide **(7)** and
- in particular the milling cutter motor **(12),** as viewed from above, is arranged in front of the milling cutter axis **(11)** and/or above the milling cutter axis **(11).**

9. Machine according to any of the preceding claims,
**characterised in that**
the transverse guides (**9**a, b) on the Z-slide (**4**a, b) are positioned and of a length such that the X-slide **(7)** can be moved forwards and downwards to such an extent that the axis of rotation **(10)** lies outside the free inner diameter of the internal milling cutter **(5).**

10. Machine according to any of the preceding claims,
**characterised in that**
- the internal milling cutter **(5)** is non-rotatably arranged in a passage (**15**a) of a spoke plate **(15)** extending in the transverse plane **(20)** to the Z-direction, and the spoke plate **(15)** has a plurality of spacers (**15**b) distributed over its circumference and extending in the Z-direction, with whose free ends it is non-rotatably fastened to a rotation ring (**15**c) which is mounted in the cross slide **(7)** by means of a milling cutter bearing **(18)** around the milling cutter axis **(11)**
and/or
- the internal milling cutter **(5),** in particular the spoke plate **(15),** is mounted relative to the cross slide **(7)** by means of a YRT bearing.

11. Machine according to any of the preceding claims,
**characterised in that**
- a longitudinal chip conveyor (**17**a), as viewed from above, is arranged in front of the front edge of the bed **(1)** and, in particular, from the end thereof a transverse chip conveyor (**17**b) runs along one of the end faces of the bed **(1),** and
- in particular the longitudinal chip conveyor (**17**a) and/or the transverse chip conveyor (**17**b), as viewed from above, lies entirely within the maximum extension of the rest of the machine in the Z-direction and in the horizontal direction transverse thereto.

12. Machine according to any of the preceding claims,
**characterised in that**
the machine is designed and dimensioned so that the centre of gravity **(21)** of the entire machine including the bed **(1)** lies within the base area of the bed **(1).**

13. Machine according to any of the preceding claims,
**characterised in that**
- an additional clamping device **(22)** is provided which can be moved on an additional Z-slide (**23**a) in the Z-direction along the mounting surface (**1**a) of the bed **(1)** on guides, in particular the second Z-guides (**16**a, b),
and/or
- the additional clamping device **(22)** comprises two clamping parts (**22**a, b) movable relative to one another in the transverse plane **(20),** in particular clamping plates (**22**a, b) extending in the transverse plane **(20)** which project towards the axis of rotation (**10**) from an additional X-slide (**23**b) movable in the transverse direction on the additional Z-slide (**23**a), and
- both of which are attached to the additional X-slide (**23**b) so as to be moveable in a direction transverse to the Z-direction, in particular the X-direction or the X' direction.

14. Machine according to any of the preceding claims,
**characterised in that**
the free inner passage (**5**a, **15**a) of the internal milling cutter (**5**) and/or of the spoke plate (**15**) is larger than the outer diameter of the chuck (**24**) and in particular larger than the outer diameter of the workpiece spindle (**2**a).

15. Machine according to any of the preceding claims,
**characterised in that**
the X-motor **(19)** for driving the cross slide (**7**), as viewed from above, is arranged in front of the milling cutter axis **(11)** and preferably above the milling cutter axis **(11),** in particular on the upper side of the Z-slide (**4**a, b) or of the cross slide **(7).**

## Revendications

1. Machine de fraisage interne pour l'usinage de pièces à usiner, tournant pendant l'usinage, avec une fraise interne, comprenant
- au moins une poupée (2) munie d'une broche porte-pièce (2a) pouvant tourner de manière commandée autour d'un axe de rotation (10) qui s'étend dans la direction Z,
- un banc (1) muni d'une surface de montage (1a), s'étendant dans les directions Z et X, pour ladite au moins une poupée (2) et d'une surface de support inférieure (1b),
- la surface de montage (1a) étant inclinée par rapport à la surface de support (1b) d'un angle de banc (8) descendant de l'arrière vers l'avant,
- au moins un support d'outil (3a) comprenant
- un chariot Z (4a) déplaçable sur des premiers guidages Z (6a, b) en direction Z le long du banc (1),
- un chariot transversal (7) déplaçable le long du chariot Z (4a) dans une, de préférence une seule, direction de déplacement (X'), s'étendant transversalement à la direction Z, le long de guidages transversaux (9a, b),
- une fraise interne annulaire (5) qui est montée en rotation autour de l'axe de fraise (11) s'étendant dans la direction Z et qui peut être entraînée par un entraînement de fraise,
- un passage Z ouvert dans la direction Z étant formé dans le chariot Z (4a), **caractérisée en ce que**
- le chariot Z (4a) est conçu comme un chariot à portique (4a) en forme de portique et est guidé, par les deux extrémités inférieures de ses deux branches à extrémité libre, sur les premiers guidages Z (6a, b) le long du banc (1),
- la direction de déplacement (X') du chariot transversal (7) le long du chariot à portique (4a) est inclinée par rapport à la direction X d'un angle supplémentaire de 45° au maximum.

2. Machine selon la revendication 1,
**caractérisée en ce que** l'angle supplémentaire est au maximum de 30°, de préférence au maximum de 15°, de préférence au maximum de 5°.

3. Machine selon l'une des revendications précédentes,
**caractérisée en ce que**
- il est prévu une deuxième poupée qui est la contre-poupée (2'), qui est déplaçable dans la direction Z le long du banc (1), le long de deuxièmes guidages Z (16a, b), et
- en particulier, les deuxièmes guidages Z (16a, b) sont disposés à l'intérieur des premiers guidages Z (6a, b).

4. Machine selon l'une des revendications précédentes,
**caractérisée en ce que**
- les guidages transversaux (9a, b) sont disposés en regard l'un de l'autre par rapport à l'axe de rotation (10).

5. Machine selon l'une des revendications 1 à 4,
**caractérisée en ce que**
- vu dans la direction Z, pour une perpendiculaire (30) abaissée du centre de la fraise (11') vers la direction X, le pied (30a) de cette perpendiculaire (30) ne se trouve, au moins pendant l'usinage, de préférence dans aucun état de fonctionnement régulier de la machine de fraisage interne, en dehors de l'espace intermédiaire entre les guidages Z (6a, b) pour le support d'outil.

6. Machine selon l'une des revendications précédentes,
**caractérisée en ce que**
- il est prévu un deuxième support d'outil (3b) qui est conçu de manière analogue au support d'outil (3a) et qui est également déplaçable dans la direction Z et de préférence le long des mêmes premiers guidages Z (6a, b) le long du banc (1), et
- en particulier, chacun des deux chariots transversaux (7) est disposé devant la surface frontale respective (4'), orientée vers l'autre support d'outil respectif (3a, b), du chariot à portique (4a, b) qui le porte.

7. Machine selon l'une des revendications précédentes,
**caractérisée en ce que**
l'angle de banc (8) est compris entre 40° et 60°, en particulier entre 45° et 55°, en particulier entre 48° et 52°.

8. Machine selon l'une des revendications précédentes,
**caractérisée en ce que**
- l'entraînement de la fraise comprend un moteur de fraise (12) ainsi qu'un mécanisme de fraise (13), et le mécanisme de fraise (13) est disposé dans un prolongement de mécanisme (14) qui fait saillie du reste du chariot transversal (7) dans une direction transversale à la direction Z, en particulier dans la direction Y perpendiculaire à la direction de déplacement (X'), et/ou qui n'est pas plus large dans la direction Z que le reste du chariot transversal (7), en particulier de la plaque frontale (7a) du chariot transversal (7), et
- en particulier, le moteur de fraise (12) est disposé, vu en plan, devant l'axe de fraise (11) et/ou au-dessus de l'axe de fraise (11).

9. Machine selon l'une des revendications précédentes,
**caractérisée en ce que**
les guidages transversaux (9a, b) sont positionnés sur le chariot Z (4a, b) et sont suffisamment longs pour que le chariot X (7) puisse être déplacé vers l'avant et vers le bas jusqu'à ce que l'axe de rotation (10) se trouve en dehors du diamètre intérieur libre de la fraise interne (5).

10. Machine selon l'une des revendications précédentes,
**caractérisée en ce que**
- la fraise interne (5) est disposée solidairement en rotation dans un passage (15a) d'une plaque à rayons (15) s'étendant dans le plan (20) transversal à la direction Z, et la plaque à rayons (15) présente, répartis sur sa périphérie, plusieurs éléments écarteurs (15b) s'étendant dans la direction Z, par les extrémités libres desquels elle est fixée solidairement en rotation à une bague de rotation (15c) qui est montée autour de l'axe de fraise (11) dans le chariot transversal (7) au moyen d'un palier de fraise (18),
et/ou
- la fraise interne (5), en particulier la plaque à rayons (15), est montée par rapport au chariot transversal (7) au moyen d'un palier YRT.

11. Machine selon l'une des revendications précédentes,
**caractérisée en ce que**
- un convoyeur longitudinal de copeaux (17a) est disposé, vu en plan, devant le bord avant du banc (1) et, en particulier, depuis son extrémité, un convoyeur transversal de copeaux (17b) s'étend le long d'un des côtés frontaux du banc (1), et
- en particulier, le convoyeur longitudinal de copeaux (17a) et/ou le convoyeur transversal de copeaux (17b), vu en plan, se trouve entièrement à l'intérieur de l'extension maximale du reste de la machine dans la direction Z et dans la direction transversale horizontale par rapport à celle-ci.

12. Machine selon l'une des revendications précédentes,
**caractérisée en ce que**
la machine est conçue et dimensionnée de telle sorte que le centre de gravité (21) de l'ensemble de la machine, y compris le banc (1), se trouve à l'intérieur de la surface de base du banc (1).

13. Machine selon l'une des revendications précédentes,
**caractérisée en ce que**
- il est prévu un dispositif de serrage supplémentaire (22) qui est déplaçable sur un chariot Z supplémentaire (23a) dans la direction Z le long de la surface de montage (1a) du banc (1) sur des guidages, en particulier sur les deuxièmes guidages Z (16 a, b),
et/ou
- le dispositif de serrage supplémentaire (22) comprend deux pièces de serrage (22 a, b) mobiles l'une par rapport à l'autre dans le plan transversal (20), en particulier des plaques de serrage (22 a, b) s'étendant dans le plan transversal (20), qui font saillie en direction de l'axe de rotation (10) à partir d'un chariot X supplémentaire (23b) déplaçable dans la direction transversale sur le chariot Z supplémentaire (23a), et
- qui sont toutes deux fixées au chariot X supplémentaire (23b) de manière à pouvoir se déplacer dans une direction transversale à la direction Z, en particulier dans la direction X ou la direction X'.

14. Machine selon l'une des revendications précédentes,
**caractérisée en ce que**
le passage intérieur libre (5a, 15a) de la fraise interne (5) et/ou de la plaque à rayons (15) est plus grand que le diamètre extérieur du mandrin de serrage (24) et en particulier plus grand que le diamètre extérieur de la broche porte-pièce (2a).

15. Machine selon l'une des revendications précédentes,
**caractérisée en ce que**
le moteur X (19) pour l'entraînement du chariot transversal (7) est disposé, vu en plan, devant l'axe de fraise (11) et de préférence au-dessus de l'axe de fraise (11), en particulier sur la face supérieure du chariot Z (4a, b) ou du chariot transversal (7).
